(19) Europäisches Patentamt
European Patent Office
Office européen des brevets

(11) Publication number: **0 364 958 A2**

# (12) EUROPEAN PATENT APPLICATION

(21) Application number: 89119267.6

(51) Int. Cl.5: **C09D 5/44**

(22) Date of filing: 17.10.89

(30) Priority: 17.10.88 JP 262304/88
14.04.89 JP 96087/89
03.10.89 JP 258041/89

(43) Date of publication of application:
25.04.90 Bulletin 90/17

(84) Designated Contracting States:
DE FR GB IT SE

(71) Applicant: **NIPPON PAINT CO., LTD.**
2-1-2, Oyodokita Kita-ku
Osaka-shi Osaka-fu(JP)

Applicant: **SANYO CHEMICAL INDUSTRIES LTD.**
11-1, Ichinohashinomoto-cho
Higashiyama-ku, Kyoto-shi
Kyoto 605(JP)

(72) Inventor: **Inoue, Tsuyoshi**
2-1-45, Suimeidai
Kawanishi-shi Hyogo(JP)
Inventor: **Fukushima, Yutaka**
2-6-17, Tsukumodai
Suita-shi Osaka(JP)
Inventor: **Nishikawa, Shigeo**
384-2, Ota Taima-cho
Kitakatsuragi-gun Nara(JP)
Inventor: **Tsuchiya, Yasuyuki**
3-8-23, Kuzuha-asashi
Hirakata-shi Osaka(JP)
Inventor: **Takaki, Katsunori**
4-18, Imakumanominamitanimachi
Higashiyama-ku
Kyoto-shi Kyoto(JP)
Inventor: **Kuriyama, Satoshi**
17-72, Kasehara-Kawahara-Kakiuchi
Shinomachi
Kameoka-shi Kyoto(JP)

(74) Representative: **Hansen, Bernd, Dr.rer.nat. et al**
Hoffmann, Eitle & Partner Patentanwälte
Arabellastrasse 4 Postfach 81 04 20
D-8000 München 81(DE)

## (54) Electrocoating composition.

(57) The present invention provides an electrocoating composition comprising a copolymer having both an aminimide group and an amino group, and a modified polyepoxide resin. The electrocoating composition of the present invention comprises;

(A) 10 to 49 % by weight of a vinyl polymer containing at least one amino group and at least one group represented by

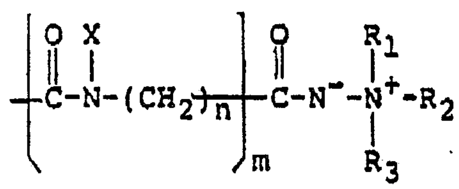

(1)

wherein $R_1$ and $R_2$ respectively represent a hydrogen atom, an alkyl group or an aryl group, $R_3$ represents an alkyl group or a hydroxyalkyl group, $R_2$ and $R_3$ together form a heterocyclic ring having a nitrogen atom, X represents an alkyl group, an aryl group or an aralkyl group, n is an integer of 1 to 4 and m is 0 or 1,

(B) 51 to 90 % by weight of a modified polyepoxide resin containing basic group of 20 to 200 mmol

EP 0 364 958 A2

based on 100 g solid content.

# ELECTROCOATING COMPOSITION

## FIELD OF THE INVENTION

The present invention relates to an electrocoating composition which provides a coated film having excellent durability.

## BACKGROUND OF THE INVENTION

An aminimide group is a group represented by

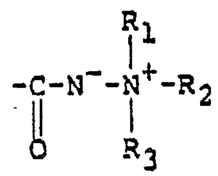

wherein $R_1$ and $R_2$ respectively represent an hydrogen atom, an alkyl group or an aryl group, $R_3$ represents an alkyl group or a hydroxyalkyl group, provided that $R_2$ and $R_3$ may together form a heterocyclic ring containing a nitrogen atom therein.
When the group is subjected to heat, it is easily decomposed to produce a highly reactive group. Accordingly, the aminimide group is very useful and applicable to many usages.

USP 4,046,658 proposes that a monomer having an aminimide group be polymerized with another copolymerizable monomer to form a copolymer which is suitable for electrocoating. The copolymer, however, is poor in corrosion resistance, when used for coating, and it therefore is difficult to practically use it.

Japanese Kokai Publication 23662/1986 discloses an electrocoating composition which comprises a copolymer having aminimide group and an amine-modified polyepoxide resin having an average molecular weight of 500 to 3,000. The compositon has improved corrosion resistance, but is poor in durability which is defined herein as combined properties of corrosion resistance and weathering resistance.

## SUMMARY OF THE INVENTION

The present invention provides an electrocoating composition comprising a copolymer having both an aminimide group and an amino group, and a modified polyepoxide resin. The electrocoating composition of the present invention comprises;

(A) 10 to 49 % by weight of a vinyl polymer containing at least one amino group and at least one group represented by

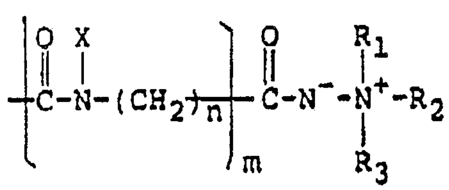 (1)

wherein $R_1$ and $R_2$ respectively represent a hydrogen atom, an alkyl group or an aryl group, $R_3$ represents an alkyl group or a hydroxyalkyl group, $R_2$ and $R_3$ together form a heterocyclic ring having a nitrogen atom, X represents an alkyl group, an aryl group or an aralkyl group, n is an integer of 1 to 4 and m is 0 or 1,

(B) 51 to 90 % by weight of a modified polyepoxide resin containing basic group of 20 to 200 mmol based on 100 g solid content.

## DETAILED DESCRIPTION OF THE INVENTION

In the formula (1), the alkyl group in $R_1$, $R_2$, $R_3$ and X includes an alkyl group having 1 to 18 carbon atoms, such as methyl, ethyl, propyl, octyl and stearyl. The aryl group of $R_1$ and $R_2$ and X includes phenyl, tolyl, xylyl and the like. The hydroxyalkyl group of $R_3$ includes a hydroxyalkyl group having 1 to 28 carbon atoms, such as hydroxymethyl, 2-hydroxyethyl, 3-hydroxypropyl, 2-hydroxypropyl, 4-hydroxybutyl, 2-hydroxydecyl, 2-hydroxyhexadecyl, 2-hyddroxyoctadecyl, 2-hydroxyeicosyl and the like; a hydroxyalkyl substituted with an aryl group, a ($C_1$-$C_{28}$) alkoxy group, an aryloxy group or an alkenoxy group, for example a 2-hydroxy-3-aryloxypropyl (such as 2-hydroxy-3-phenoxypropyl), a 2-hydroxy-3-alkoxypropyl (2-hydroxy-3-butoxypropyl, 2-hydroxy-3-tridecyloxypropyl, 2-hydroxy-3-hexadecyloxypropyl), a 2-hydroxy-3-alkenoxypropyl, a 2-hydroxy-3-aryloxypropyl, 2-hydroxy-3-oleiloxypropyl, 2-hydroxy-2-arylethyl(2-hydroxy-2-phenylethyl); and the like. $R_2$ and $R_3$ may together form a heterocyclic ring having a nitrogen atom, such as pyrrolidiene, pyrrole, pyrroline, piperidine and the like. The aralkyl of X includes benzyl. The number n is an integer of 1 to 4, preferably 1 to 3. Numbers of more than 4 deteriorate curing ability. The number m represents 0 or 1, preferably 0.

The vinyl polymer (A) of the present invention can be prepared from an aminimide group-containing monomer (a), an amino group-containing monomer (b) and, if necessary, another monomer (c).

The aminimide group-containing monomer (a) includes a compound having the following formula;

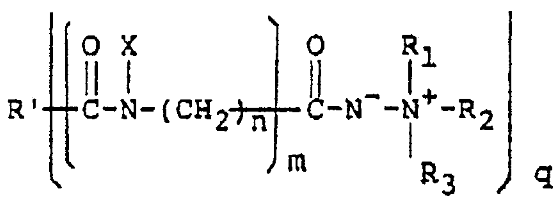

(3)

wherein R′ represents a residue of an unsaturated monocarboxylic acid or unsaturated dicarboxylic acid, q is 1 or 2, $R_1$, $R_2$, $R_3$, X, n and m are the same as mentioned above. Typical examples of the monomers (a) are

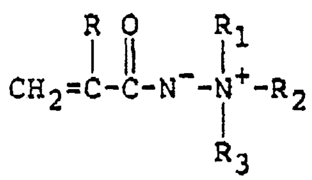

(4)

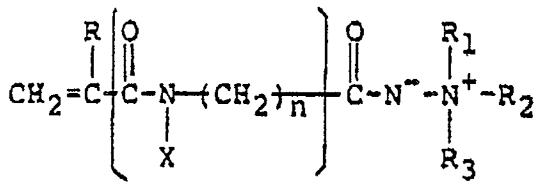

(5)

wherein R represents a hydrogen atom, an alkyl group having 1 to 6 carbon atom (such as methyl, ethyl, propyl, hexyl etc.), a halogen atom (such as chlorine, bromine etc.) or an cyano group, $R_1$, $R_2$, $R_3$ and X are the same as mentioned above. More detailed explanation of the monomer (a) is in USP 4,046,658 which is incorporated herein.

The amino group-containing monomer (b) includes dimethylaminoethyl (meth)acrylate, diethylaminoethyl (meth)acrylate, diethylaminopropyl (meth)acrylate, dimethylaminopropyl (meth)-acrylamide, diethylaminopropyl (meth)acrylamide, a compound having the formula (6);

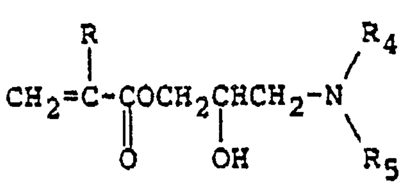

(6)

wherein R is the same as mentioned above, $R_4$ and $R_5$ respectively represent a hydrogen atom, an alkyl group, a hydroxyalkyl group, an aryl group, an aralkyl group or a ketimine blocked alkyl group.
and the like. Typical examples of the compounds having the formula (5) are 3-(N,N-diethyl)amino-2-hydroxypropyl (meth)acrylate, 3-(N,N-diphenyl)amino-2-hydroxypropyl (meth)acrylate, (N-phenyl-N-ethanol)-amino-2-hydroxypropyl (meth)acrylate, 3-(N-benzyl-N-ethanol)amino-2-hydroxypropyl (meth)acrylate, 3-(n-methyl-N-ethanol)amino-2-hydroxypropyl (meth)acrylate, 3-(N,N-bisethanol)amino-2-hydroxypropyl (meth)-acrylate, 3-(N,N-bisisopropanol)amino-2-hydroxypropyl (meth)acrylate,

$$\begin{array}{l} CH_2=C(Me)COOCH_2CH(OH)CH_2N-C_2H_5 \\ \qquad\qquad\qquad\qquad\qquad\quad | \\ \qquad\qquad\qquad\qquad\qquad\quad C_2H_4N=C(Me)_2 \end{array}$$

$$\begin{array}{l} CH_2=C(Me)COOCH_2CH(OH)CH_2N-C_2H_5 \\ \qquad\qquad\qquad\qquad\qquad\quad | \\ \qquad\qquad\qquad\qquad\qquad\quad C_2H_4N=C(Me)(C_4H_9) \end{array}$$

$$\begin{array}{l} CH_2=CHCOOCH_2CH(OH)CH_2N-C_2H_5 \\ \qquad\qquad\qquad\qquad\qquad | \\ \qquad\qquad\qquad\qquad\qquad C_2H_4N=C(Me)_2 \end{array}$$

$$\begin{array}{l} CH_2=CHCOOCH_2CH(OH)CH_2N-C_2H_5 \\ \qquad\qquad\qquad\qquad\qquad | \\ \qquad\qquad\qquad\qquad\qquad C_2H_4N=C(Me)(C_4H_9) \end{array}$$

$$\begin{array}{l} CH_2=C(Me)COOCH_2CH(OH)CH_2N-Me \\ \qquad\qquad\qquad\qquad\qquad\quad | \\ \qquad\qquad\qquad\qquad\qquad\quad C_3H_6N=C(Me)(C_4H_9) \end{array}$$

$$\begin{array}{l} CH_2=CHCOOCH_2CH(OH)CH_2N-Me \\ \qquad\qquad\qquad\qquad\qquad | \\ \qquad\qquad\qquad\qquad\qquad C_3H_6N=C(Me)_2 \end{array}$$

$$\begin{array}{l} CH_2=C(Me)COOCH_2CH(OH)CH_2N-Me \\ \qquad\qquad\qquad\qquad\qquad\quad | \\ \qquad\qquad\qquad\qquad\qquad\quad C_6H_{12}N=C(Me)(C_4H_9) \end{array}$$

$$\begin{array}{l} CH_2=C(Me)COOCH_2CH(OH)CH_2N-C_2H_4N=C(Me)_2 \\ \qquad\qquad\qquad\qquad\qquad\quad | \\ \qquad\qquad\qquad\qquad\qquad\quad C_2H_4N=C(Me)_2 \end{array}$$

$$\begin{array}{l} CH_2=C(Me)COOCH_2CH(OH)CH_2NC_2H_4N=C(Me)(C_4H_9) \\ \qquad\qquad\qquad\qquad\qquad\quad | \\ \qquad\qquad\qquad\qquad\qquad\quad C_2H_4N=C(Me)(C_4H_9) \end{array}$$

and the like. The compound having the formula (5) may be generally prepared by reacting a glycidyl (meth)acrylate with a compound having a secondary amino group and, if necessary, a ketimine group.

The other monomer (c) of the present invention includes a $C_1$-$C_{12}$ alkyl (meth)acrylate, such as methyl (meth)acrylate, ethyl (meth)acrylate, n-butyl (meth)acrylate and 2-ethylhexyl (meth)acrylate; a $C_1$-$C_{10}$ hydroxyalkyl (meth)acrylate, such as hydroxyethyl (meth)acrylate, hydroxypropyl (meth)acrylate, hydroxyhexyl (meth)acrylate and a derivative thereof (e.g.

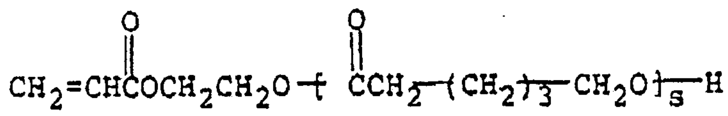

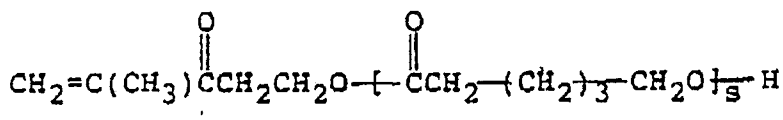

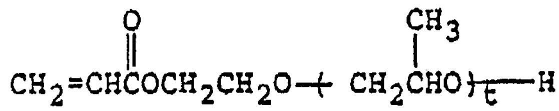

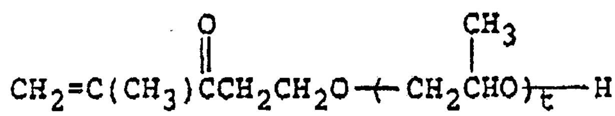

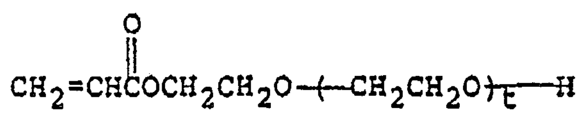

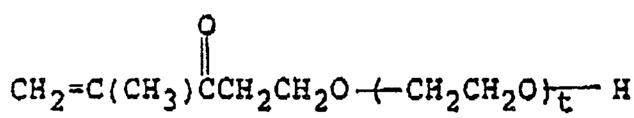

wherein s is an integer of 1 to 50, and t is an integer of 1 to 100.); an aromatic vinyl monomer, such as styrene, alpha-methylstyrene and alpha-chlorostyrene; a halogen-containing monomer, such as vinyl chloride and vinylidene chloride; an alkyl or cycloalkyl vinyl ether, such as methyl vinyl ether and cyclohexyl vinyl ether; a vinyl ester, such as vinyl acetate; a nitrile monomer, such as acrylonitrile; an amide containing monomer, such as (meth)acrylamide, crotonamide, N-methylolacrylamide and fumardiamide; a carboxyl group containing monomer, such as (meth)acrylic acid, maleic acid and maleic anhydride; a perfluoroalkyl ester of unsaturated carboxylic acid, such as a compound represented by

$CH_2=C(R)COO\text{-}A\text{-}(\text{-}Z\text{-})_p\text{-}R_f$

wherein A represents a $C_1$-$C_{18}$ alkylene group which may be substituted with a hydroxyl group, Z represents -CONX- or $SO_2NX$-, $R_f$ is a perfluoroalkyl group, p is 0 or 1, R and X are the same as mentioned above; and the like. Preferred monomer (c) are an alkyl (meth)acrylate, a hydroxyalkyl (meth)acrylate, a (meth)acrylamide and a perfluoroalkyl (meth)acrylate. More preferred are n-butyl acrylate, hydroxyethyl methacrylate and methacrylamide.

The amine imide containing monomer (a) can be present in the polymer (A) in an amount of 2 to 40 mol %, preferably 5 to 30 mol %. Amounts of less than 2 are poor in crosslink density and water solubility. Amounts of more than 40 mol % deteriorate polymerization degree. The amino group containing monomer (b) can be present in the polymer (A) in an amount of 2 to 60 mol %, preferably 5 to 50 mol %. If the monomer (b) is less than 3 mol %, the hydrophilic nature of the obtained vinyl polymer (A) declines so as to cause problems in the stability of the obtained electrocoating bath. If it is more than 60 mol %, the hydrophilic nature of the polymer (A) is too large to form coating film. The monomer (c) can be present in the polymer (A) in an amount of 0 to 90 mol %, preferably 20 to 80 mol %. Amounts of more than 90 mol % are poor in curing properties.

The vinyl polymer (A) may be prepared by radical polymerization of the above monomers, preferably in an organic solvent. The organic solvent can be one which is not reactive with the monomers and dissolves them, for example ethanol, isopropanol, t-butanol, acetone, methyl ethyl ketone, diethyl ketone, dioxane, tetrahydrofuran, ethyl acetate, ethyleneglycol monoethyl ether, ethyleneglycol monobutyl ether, and a mixture thereof. If the emulsion polymerization is adopted, water is generally employed in combination with

the above mentioned organic solvent. The organic solvent can be used in an amount ratio of the monomer / the solvent of 1 / 10 to 2 / 1, preferably 1 / 2 to 5 / 1.

The radical polymerization can be initiated with a radical polymerization initiator. Examples of the initiators are azo compounds, such as azobisisobutyronitrile, azobisisovaleronitrile, 2,2-azobis(2-amidinopropane)hydrochloride and azobiscyanovaleric acid; peroxides, such as hydrogen peroxide, potassium persulfate, benzoyl peroxide, di-t-butyl peroxide and cumenehydroperoxide; redox compounds, such as L-ascorbic acid and alkaline metal persulfate, benzoyl peroxide and N,N-dimethylaniline; and the like. The azo compounds are preferred, because it does not oxidize the aminimide groups. An amount of the polymerization initiator is within the range of 0.001 to 20 % by weight, preferably 0.1 to 10 % by weight, based on the total amount of the monomers. A chain transfer agent can be added thereto, if required. Examples of the chain transfer agents are n-lauryl mercaptane, n-dodecyl mercaptane, t-dodecyl mercaptane, 2-mercaptoethanol and the like. The radical polymerization can be carried out at a temperature of 50 to 110 °C, preferably 70 to 90 °C in view of the decomposition temperature of the aminimide groups.

The vinyl polymer (A) can be prepared by copolymerizing the amine imide monomer (a), the amino group containing monomer (b) and, if necessary, the other monomer (c). It can also be prepared by first obtaining a vinyl polymer and then introducing an aminimide group or an amino group into it.

The introduction of the aminimide group into the vinyl polymer back bone can be carried out by copolymerizing without using the amine imide monomer (a) and then reacting with dimethylhydrazine and a saturated epoxy compound. Examples of the saturated epoxy compounds are ethylene oxide, propylene oxide, phenyl glycidyl ether, glycidylphthalimide, ethyleneglycol diglycidyl ether, propyleneglycol diglycidyl ether, 1,6-hexanediol diglycidyl ether, neopentylglycol diglycidyl ether, adipic acid diglycidyl ester and the like. The formation of an aminimide group can be identified by infrared spectrum.

As a method wherein a gamma-amino-beta-hydroxypropyl ester group is introduced a copolymer backbone, glycidyl (meth)acrylate is copolymerized and then reacted with a secondary amine.

The vinyl polymer (A) of the present invention preferably has a molecular weight of 2,000 to 300,000, preferably 4,000 to 100,000.

The obtained vinyl polymer (A) can be decomposed at the aminimide group to produce an isocyanate group and a tertiary amine group, which is then reacted with an active hydrogen containing compound or an epoxy compound to form three dimensional network.

The modified epoxy resin (B) of the present invention can be generally prepared by attaching a secondary amine to an epoxy resin. The epoxy resin includes one described in "EPOXY RESIN" by Kensaku SAEKI, Kobunshi Kankokai, 1973 Japan, such as glycidyl ether type epoxy resin, glycidyl ester type epoxy resin, linear aliphatic epoxy resin, alicyclic epoxy resin; an epoxy resin listed above which is extended with polyether glycol or polyester glycol. Examples of the secondary amines are diethylamine, dibutylamine, diethanolamine, N-methylethanolamine, a ketimine-blocked secondary amine.

The modified resin (B) can also be prepared by reacting an epoxy resin with a tertiary amine or a phosphine in the presence of an acid to form a quaternary onium salt. The basic groups of the modified resin (B) may be a mannich salt group, but can be combined with other basic groups.

The electrocoating composition of the present invention can be neutralized with acid to make water soluble or water dispersible. Examples of the acids are formic acid, acetic acid, lactic acid and the like. The acid can be added in such an amount that the neutralization degree of the basic groups is 10 to 150 %, preferably 20 to 100 %. If the neutralization degree is less than 10 %, water solubility or water dispersibility declines. If it is more than 150 %, coating appearance declines and problems of corrosion of coating facilities may occur due to a low pH value. The neutralization may be carried out by either neutralizing the vinyl polymer (A) which has been already synthesized, or neutralizing the monomers followed by emulsion polymerizing. The vinyl polymer (A) and the modified epoxy resin (B) may be mixed either after respectively forming water dispersions, or mixed intact followed by forming water dispersions.

The coating composition of the present invention generally contains 10 to 49 % by weight, preferably 20 to 40 % by weight of the vinyl polymer (A), and 51 to 90 % by weight, preferably 60 to 80 % by weight of the modified epoxy resin (B). If the resin (B) is less than 51 % by weight, corrosion resistance declines. If it is more than 90 % by weight, weather resistance is poor.

Both the vinyl polymer (A) and the modified epoxy resin (B) have solubility parameters ($(A)_{sp}$ and $(B)_{sp}$) sufficient to meet the following equation;

$(B)_{sp} - (A)_{sp} \geqq 0.5$,

preferably $(B)_{sp} - (A)_{sp} \geqq 0.8$.

If $(B)_{sp} - (A)_{sp}$ is less than 0.5, weather resistance declines.

The electrocoating composition of the present invention may generally contain a curing agent, such as a blocked isocyanate compound and an amino resin. The blocked isocyanate compound is a

polyisocyanate compound of which isocyanate groups are blocked with a blocking agent. Examples of the polyisocyanate compounds are tolylene diisocyanate, xylylene diisocyanate, isophorone diisocyanate, hexamethylene diisocyanate and the like. Examples of the blocking agents are alcohols, phenols, oximes and the like. Examples of the amino resins are a urea resins or a modified one thereof (e.g. butanol modified urea resin, methanol modified urea resin, esterified urea resin, ethylene urea resin, glyoxal urea resin, triazone type urea resin, uron resin, pyrimizone resin, cationic urea resin and anionic urea resin); a melamine resin and a modified one thereof (e.g. a condensate of melamine resin and urea, n-butanol modified melamine resin, isobutanol modified melamine resin and methoxylated melamine); a guanamine resin (e.g. benzoguanamine resin and butylated benzoguanamine resin); an aniline resin; a sufonamide resin; and the like. Preferred are a melamine resin and a modified one thereof. The curing agent can be present in the composition in an amount of less than 40 % by weight based on the total weight of the electrocoating composition.

The electrocoating composition of the present invention may further contain other resins, filler, organic solvent, pigment, other additives (e.g. ultraviolet absorber, heat resistant agent, leveling agent, deforming agent ant anti-sagging agent) and the like.

The other resins include those generally employed in this field, such as acryl resin, epoxy resin, polyester, polyurethane and the like.

The organic solvent includes alcohols, such as methyl alcohol, ethyl alcohol, isopropyl alcohol, butyl alcohol and hexyl alcohol; ethyleneglycol monoethers, such as ethyleneglycol monomethyl ether, ethyleneglycol monoethyl ether, ethyleneglycol monobutyl ether and ethyleneglycol monoisopropyl ether; hydrocarbons, such as xylene and toluene; ketones, such as methyl ethyl ketone, methyl isobutyl ketone and isophorone; and the like.

The filler and pigment include an extender pigment, such as calcium carbonate, kaolin, talc, aluminum silicate and aerogel; an inorganic pigment, such as titanium oxide, iron oxide, lead yellow, cadmium oxide, carbon black and aluminium flake; an organic pigment, such as an azo pigment, an azo-lake pigment, a phthalocyanine pigment, a quinacridone pigment and an isoquinacridone pigment; a corrosion preventive pigment, such as strontium chromate and basic lead silicate; and the like.

The electrocoating composition may also contain an organic tin compound to promote curing properties. The organic tin compound is described in detail in Japanese Patent Application Ser. No. 60062/1988. The organic tin compound may preferably be present in the composition in an amount of 0.01 to 20 parts by weight, more preferably 0.1 to 10 parts by weight.

Electrocoating conditions are those known to the art, preferably at a bath temperature of 15 to 35 °C, a solid content of 3 to 25 % by weight and a coating voltage of 30 to 350 volt. A substrate to be coated can be metal, such as iron, copper, aluminum, zinc, and an alloy; or a conductive organic material.

The electrocoating composition of the present invention is coated on the substrate and baked at a temperature of as low as 160 °C to form cured coatings. The cured coatings has excellent durability which is combined properties of weather resistance and corrosion resistance, in addition to good adhesion and water resistance.

## EXAMPLES

The present invention is illustrated by the following Examples, which are not to be construed as limiting the invention to their details.

### Production Example 1

A reaction vessel was charged with 67 parts by weight of isopropanol and heated to 75 to 80 °C. A mixture of the following ingredients was added dropwise to it for three hours;

| Ingredients | Parts by weight |
|---|---|
| 1,1-Dimethyl-1-(2-hydroxypropyl)-amine methacrylimide (hereinafter "AMI") | 20 |
| 3-(N,N-Bisethanol)amino-2-hydroxy propyl methacrylate | 10 |
| Methyl methacrylate | 10 |
| 2-Ethylhexyl methacrylate | 40 |
| n-Butyl acrylate | 20 |
| n-Lauryl mercaptane | 3 |
| Azobisisobutyronitrile | 3 |
| Ethyleneglycol monobutyl ether | 33 |

After mixing for another 2 hours at the same temperature, 0.3 parts by weight of azobisisobutyronitrile was added and mixed for 2 hours. It was then evaporated to remove isopropanol, thus obtaining a resin solution (A-1) having a nonvolatile content of 75 %.

Production Example 2

A reaction vessel was charged with 5 parts by weight of 1,1-dimethyl-1-(2-hydroxyhexadecyl)amine methacrylimide and 83 parts by weight of water and heated to 70 to 75 °C. A mixture of the following Feeds A and B was added dropwise to it for three hours;

| Ingredients | Parts by weight |
|---|---|
| Feed A | |
| AMI | 15 |
| 3-(N,N-Bisethyl)amino-2-hydroxy propyl methacrylate | 10 |
| Methyl methacrylate | 20 |
| 2-Ethylhexyl methacrylate | 30 |
| n-Butyl acrylate | 20 |
| Acetic acid | 3 |
| Ethyleneglycol monomethyl ether | 20 |
| Water | 3 |
| Feed B | |
| 2,2-Azobis(2-amidinopropane)hydrochloride | 1 |
| Water | 43 |

After mixing for another one hour at the same temperature, 0.2 parts by weight of 2,2-azobis(2-amidinopropane)hydrochloride was added and mixed for one hour to obtain a resin solution (A-2) having a nonvolatile content of 40 %.

Production Example 3

A resin solution (A-3) having a solid content of 75 % was obtained as generally described in Production Example 1 from the following ingredients.

| Ingredients | Parts by weight |
|---|---|
| Isopropanol | 67 |
| AMI | 12 |
| Dimethylaminoethyl methacrylate | 16 |
| An additive of hydroxyethyl methacrylate with 1 mol of caprolactone | 10 |
| 2-Ethylhexyl methacrylate | 30 |
| n-Butyl methacrylate | 32 |
| n-Lauryl mercaptane | 3 |
| Azobisisobutyronitrile | 3 |

Production Example 4

A resin solution (A-4) without amino groups having a solid content of 75 % was obtained as generally described in Production Example 1 from the following ingredients.

| Ingredients | Parts by weight |
|---|---|
| Isopropanol | 67 |
| AMI | 20 |
| 2-Hydroxyethyl methacrylate | 10 |
| Methyl methacrylate | 20 |
| 2-Ethylhexyl methacrylate | 20 |
| n-Butyl acrylate | 30 |
| n-Lauryl mercaptane | 3 |
| Azobisisobutyronitrile | 3 |
| Ethyleneglycol monobutyl ether | 33 |

Production Example 5

A resin solution (A-5) having a solid content of 75 % was obtained as generally described in Production Example 1 from the following ingredients.

| Ingredients | Parts by weight |
|---|---|
| Isopropanol | 67 |
| AMI | 20 |
| Dimethylaminoethyl methacrylate | 15 |
| Methyl methacrylate | 40 |
| n-Butyl acrylate | 30 |
| n-Lauryl mercaptane | 3 |
| Azobisisobutyronitrile | 3 |
| Ethyleneglycol monobutyl ether | 33 |

Production Example 6

A reaction vessel was charged with 155 parts by weight of diethylenetriamine and 450 parts by weight of methyl isobutyl ketone, and reacted at 100 to 150 °C for 5 hours in a nitrogen atmosphere to obtain a ketimine having an amine value of 367 which is calculated in terms of secondary amine.

Production Example 7

A reaction vessel was charged with 1078 parts by weight of an epoxy resin (YD-011 available from Toto Kasei Company), 69 parts by weight of xylene, 292 parts by weight of polycaprolactonediol (PCP-200 available from UCC) and 2.4 parts by weight of dimethylbenzylamine, and reacted at 140 °C for 3 hours in a nitrogen atmosphere to obtain a modified epoxy resin.

Next, 286 parts by weight of ethyleneglycol monoethyl ether was added to it. After cooling to 110 °C, 90 parts by weight of diethanolamine and 80 parts by weight of the ketimine of Production Example 6 were added and reacted at 115 °C for one hour to obtain an amine modified epoxy resin (B-1) having an amine value of 100 mmol/100 g solid content and having a nonvolatile content of 80 %.

Production Example 8

An autoclave was charged with an epoxized polybutadiene (Nisseki Polybutadiene E-1800-6,5 available from Nippon Petrochemicals Co., Ltd.), 402 parts by weight of ethyleneglycol monobutyl ether, 32 parts by weight of dimethylamine and 85 parts by weight of N-methylethanolamine, and reacted at 150 °C for 5 hours. After removing unreacted amine, it was cooled to 120 °C, to which 105 parts by weight of acrylic acid and 8 parts by weight of hydroquinone were added and reacted at 120 °C for 4 hours to obtain an amine modified epoxy resin solution (B-2) having a nonvolatile content of 75 %, an amine value of 147 mmol/100 g solid content and an acid value of 8 mmol/100 g solid content.

Production Example 9

| Part A | |
|---|---|
| Ingredient | Parts by weight (g) |
| Epicoat 1004* | 1000 |
| Ethylene glycol monoethyl ether | 340 |
| Hydroquinone | 10 |
| Acrylic acid | 76 |
| N,N-dimethylaminoethanol | 5 |

* A bisphenol type epoxy resin having an epoxy equivalent of 950 commercially available from Shell Company.

Epicoat 1004 was dissolved in ethylene glycol monoethyl ether. Acrylic acid, hydroquinone and N,N-dimethylaminoethanol were then added and heated to 100 °C at which reaction was carried out for 5 hours to obtain a resin solution (B-3) having an acid value of 10 mmol/100 g solid content and a nonvolatile content of 75 %.

Production Example 10

A reaction vessel was charged with 511 parts by weight of isophorone diisocyanate, 1.1 part by weight of dibutyl-bis(lauroyloxy)stannan and 15 parts by weight of methyl isobutyl ketone to form a mixture. Then, 271 parts by weight of ethyleneglycol monobutyl ether was added dropwise at 40 °C for 4 hours with stirring to obtain a half blocked isocyanate.

Next, 103 parts by weight of 2-ethyl-2-hydroxymethyl-1,3-propanediol which was melted at 70 °C was

added and reacted at 130 °C for 2 hours. It was then diluted with 364 parts by weight of ethyleneglycol monoethyl ether to obtain a blocked isocyanate solution (D) having a nonvolatile content of 70 % by weight.

Examples 1, 2, 5, 7 and Comparative Examples 1 to 4

A reaction vessel was charged with 400 parts by weight of the resin solution (A-1), 880 parts by weight of the amine modified epoxy resin solution (B), 50 parts by weight of a melamine resin (Cymel 1130-235J available from Mitsui Cyanamid Company), 290 parts by weight of the blocked isocyanate solution (D) and 30 parts by weight of dibutyltin dilaurate, and mixed at 90 to 95 °C for 15 minutes in a nitrogen atmosphere. Then, 18 parts by weight of acetic acid was added and mixed at 90 to 95 °C for one hour in a nitrogen atmosphere, followed by adding deionized water, to form an aqueous dispersion having a nonvolatile content of 10 %.

A zinc phosphated steel panel which was served as a cathode was immersed at 28°C in the aqueous dispersion and electrocoated at 210 volt for 3 minutes. The electrocoated panel was rinsed with water and baked at 160 °C for 30 minutes to form a uniform electrocoated film having 20 micron.

As generally described above, Examples 2, 5, 7 and Comparative Examples 1 to 4 were conducted using the composition and conditions as shown in Table 1 to form a uniform electrocoated film having 20 micron.

The obtained film was evaluated in durability and the results are shown in Table 1.

Examples 3 and 4

A reaction vessel was charged with the amine modified epoxy resin (B), the blocked isocyanate (D) and dibutyltin dilaurate in the amounts as shown in Table 1 to form an aqueous dispersion having nonvolatile content of 10 %. Electrocoating was conducted at the voltage as shown in Table 1 to form a uniform film having 20 micron.

The obtained film was evaluated in durability and the results are shown in Table 1.

Example 6

A reaction vessel was charged with 610 parts by weight of the resin solution (A-3), 550 parts by weight of the amine modified polybutadiene (B-2), 530 parts by weight of the modified epoxy resin solution (B-3), 4 parts by weight of manganese acetate, 0.5 parts by weight of cobalt acetate and 30 parts by weight of dibutyltin dilaurate, and mixed at 90 to 95 °C for 15 minutes. After adding 11 parts by weight of acetic acid, it was mixed at 90 to 95 °C for one hour to form an aqueous solution having a nonvolatile content of 10 %.

A zinc phosphated steel panel which was served as a cathode was immersed at 28 °C in the aqueous dispersion and electrodeposited at 180 volt for 3 minutes. The electrocoated panel was rinsed with water and baked at 160 °C for 30 minutes to form a uniform electrocoated film having 20 micron.

The obtained film was evaluated in durability and the results are shown in Table 1.

Table 1

| | | Examples | | | | | | | Comparative Examples | | | |
|---|---|---|---|---|---|---|---|---|---|---|---|---|
| | | 1 | 2 | 3 | 4 | 5 | 6 | 7 | 1 | 2 | 3 | 4 |
| The vinyl poly (A) (parts) | (A-1) | 400 | 670 | 0 | 0 | 0 | 0 | 0 | 0 | 0 | 1000 | 0 |
| | (A-2) | 0 | 0 | 850 | 380 | 0 | 0 | 0 | 0 | 940 | 0 | 0 |
| | (A-3) | 0 | 0 | 0 | 0 | 330 | 610 | 620 | 0 | 0 | 0 | 0 |
| | (A-4) | 0 | 0 | 0 | 0 | 0 | 0 | 0 | 1600 | 0 | 0 | 0 |
| | (A-5) | 0 | 0 | 0 | 0 | 0 | 0 | 0 | 0 | 0 | 0 | 330 |
| The modified epoxy resin solution (parts) | (B-1) | 880 | 940 | 880 | 1010 | 940 | 0 | 840 | 0 | 670 | 310 | 940 |
| | (B-2) | 0 | 0 | 0 | 0 | 0 | 550 | 0 | 0 | 0 | 0 | 0 |
| | (B-3) | 0 | 0 | 0 | 0 | 0 | 530 | 0 | 0 | 0 | 0 | 0 |
| Cymel 1130-235J (parts) | | 50 | 0 | 0 | 50 | 0 | 0 | 0 | 0 | 0 | 0 | 0 |
| Blocked isocyanate solution (D) (parts) | | 290 | 0 | 0 | 310 | 360 | 0 | 290 | 0 | 0 | 360 | 360 |
| Dibatyltim dilaurate (parts) | | 20 | 0 | 30 | 30 | 30 | 30 | 30 | 0 | 0 | 30 | 30 |
| Solubility parameter *-1 (sp) (B)sp-(A)sp | | 1.0 | 1.0 | 0.8 | 0.8 | 0.9 | 0.8 | 0.9 | - | 0.8 | 1.0 | 0.2 |
| Average particle size of the aqueous solution (μ) *-2 | | 0.06 | 0.06 | 0.05 | 0.05 | 0.04 | 0.04 | 0.04 | 5 | 0.06 | 0.05 | 0.06 |
| Electrocoating voltage (V) | | 210 | 200 | 190 | 240 | 250 | 180 | 240 | 100 | 190 | 170 | 200 |
| Durability *-3 | | 100 | 90 | 100 | 92 | 90 | 100 | 100 | 10 | 42 | 27 | 24 |

*-1

The solubility parameter was determined according to a method of J.P.S.A-1, by Suh Clarke, 5, 1671 to 1681 (1967). A solvent in a sample was removed and then dissolved in 10 ml of dioxane. It was measured by a turbidity measuring method using n-hexane and water.

*-2

The average particle size of an emulsion was calculated from the following equation.

$$\text{Particle size} = 10^{-[3.1653X(\log A-\log B)-3.2175]}$$

wherein A and B respectively represent absorbances at 400 nm and 550 nm (see Official Digest, 1959, February, pp 200 to 213).

*-3

The durability was a combined properties of weather resistance and corrosion resistance, which is expressed as (an evaluation of weather resistance) times (an evaluation of corrosion resistance). Gloss retention was evaluated after putting a sample panel in a Sunshine Weather-O-Meter available from Suga Test Machine Company for 300 hours. Evaluation was made as follow;

| | |
|---|---|
| 10 points | More than 91 % |
| 9 | 81 to 90% |
| 8 | 71 to 80 |
| 7 | 61 to 70 |
| 6 | 51 to 60 |
| 5 | 41 to 50 |
| 4 | 31 to 40 |
| 3 | 21 to 30 |
| 2 | 11 to 20 |
| 1 | Less than 10 % |

Corrosion resistance was evaluated by cross-cutting a sample panel, salt-spraying it for 500 hours, and

peeling adhesive tape thereon, from the following standard;

| | |
|---|---|
| 10 points | Less than 1 mm |
| 9 | 1 to 1.5 mm |
| 8 | 1.6 to 2.0 mm |
| 7 | 2.1 to 2.5 mm |
| 6 | 2.6 to 3.0 mm |
| 5 | 3.1 to 3.5 mm |
| 4 | 3.6 to 4.0 mm |
| 3 | 4.1 to 4.5 mm |
| 2 | 4.6 to 5.0 mm |
| 1 | More than 5.1 mm |

## Claims

1. An electrocoating composition which comprises;

(A) 10 to 49 % by weight of a vinyl polymer containing at least one amino group and at least one group represented by

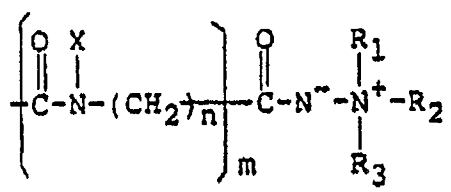

(1)

wherein $R_1$ and $R_2$ respectively represent a hydrogen atom, an alkyl group or an aryl group, $R_3$ represents an alkyl group or a hydroxyalkyl group, $R_2$ and $R_3$ together form a heterocyclic ring having a nitrogen atom, X represents an alkyl group, an aryl group or an aralkyl group, n is an integer of 1 to 4 and m is 0 or 1,

(B) 51 to 90 % by weight of a modified polyepoxide resin containing basic group of 20 to 200 mmol based on 100 g solid content.

2. The electrocoating composition according to Claim 1 wherein said vinyl polymer (A) contains the group (1) in an amount of 2 to 40 mol % and the amino group in an amount of 2 to 60 mol %.

3. The electrocoating composition according to Claim 1 or 2 wherein said amino group has the following formula;

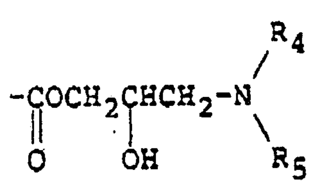

(2)

wherein $R_4$ and $R_5$ respectively represent a hydrogen atom, an alkyl group, a hydroxyalkyl group, an aryl group, an aralkyl group or a ketimine-blocked alkyl group.

4. The electrocoating composition according to anyone of Claims 1 to 3 wherein said modified polyepoxide resin is an amine-modified polyepoxide resin.

5. The electrocoating composition according to anyone of Claims 1 to 3 further comprising 1 to 70 parts by weight of an amino resin (C) and/or a blocked isocyanate (D); parts by weight being based on 100 parts by weight of the total amount of the vinyl polymer (A) and the modified polyepoxide resin (B).

6. The electrocoating composition according to anyone of Claims 1 to 3 further comprising 0.01 to 20 parts by weight of an organic tin compound (E), based on 100 parts by weight of the total amount of the vinyl polymer (A) and the modified polyepoxide resin (B).

7. The electrocoating composition according to anyone of Claims 1 to 3 wherein said vinyl polymer (A) and modified polyepoxide resin (B) meet the following equation in solubility parameter;

$(B)_{sp} - (A)_{sp} \geqq 0.5$